# EUROPEAN PATENT SPECIFICATION

(11) **EP 3 473 342 B1**
(45) Date of publication and mention of the grant of the patent: **25.11.2020**
(21) Application number: 17814491.1
(22) Date of filing: 25.04.2017
(51) Int. Cl.: B05B 1/16, F16K 11/07, E03C 1/04, E03C 1/08, B05B 12/00, B05B 1/30, B05B 1/26

(54) **KITCHEN SPRINKLER AND KITCHEN FAUCET USING SAME**
KÜCHENSPRINKLER UND KÜCHENARMATUR DAMIT
ARROSEUR DE CUISINE ET ROBINET DE CUISINE L'UTILISANT

(30) Priority: 20.06.2016 CN 201610454338
(43) Date of publication of application: 24.04.2019
(73) Proprietor: Bestware Hardware Production Co., Ltd., Jiangmen, Guangdong 529000 (CN)
(72) Inventor: HUANG, Weiqiang, Jiangmen, Guangdong 529000 (CN)
(74) Representative: Games, Robert Harland
(86) International application number: PCT/CN2017/081887
(87) International publication number: WO 2017/219753

(56) References cited:
- EP-A1- 1 673 564
- WO-A2-2005/098150
- CN-A- 101 516 520
- CN-A- 105 163 862
- CN-A- 105 944 848
- CN-U- 203 834 584
- CN-U- 204 328 069
- CN-U- 205 731 680
- CN-Y- 2 215 053
- DE-U1- 20 300 448
- GB-A- 2 155 817
- US-A- 4 221 337
- US-A- 4 221 337
- US-A- 4 582 253
- US-A- 5 348 231
- US-A1- 2007 235 091
- US-A1- 2007 252 022
- US-B1- 6 296 011
- US-B2- 7 871 020

## Description

### FIELD OF THE INVENTION

The disclosure relates to a kitchen sprinkler and a kitchen faucet using same.

### BACKGROUND OF THE INVENTION

Kitchen faucets with a kitchen sprinkler such as disclosed in DE20300448 are widely used in a commercial or industrial kitchen such as hotel, restaurant or food processing factory. The kitchen sprinkler usually has two water discharge modes, i.e., straight mode and spraying mode, which are respectively used to clean kitchen utensils such as pot and pan, and vegetables. In the existing kitchen sprinkler, it is very inconvenient that the water discharge mode is usually changed by detachment and replacement of different sprinkler heads, which are easy to fall off, and to be damaged or lost. As such, it results in complicated overall structure, big volume and complicated production process of the existing kitchen sprinkler, with difficulty in assembly, even indirectly increases the cost due to production of non-performing products.

### SUMMARY OF THE INVENTION

In order to overcome the deficiencies in the prior art, the disclosure provides a kitchen sprinkler and a kitchen faucet using same, which are convenient for conversion of water discharge mode, small in structure, simple in use, and advantageous for the user.

The technical solutions used in the disclosure to solve the technical problems are summarised as follows.

A kitchen sprinkler includes a sprinkler body and a sprinkler head provided with a spraying water outlet body and a V-shaped water outlet body. The sprinkler head is provided with a water separator. The water separator is provided with an annular flow channel and an inner flow channel respectively in communication with the spraying water outlet body and the V-shaped water outlet body. A lower end of an outer wall of the water separator is circumferentially provided with a plurality of water inlets that are in communication with the annular flow channel. A lower side of the water inlet is provided with a first sealing ring. A water outlet port of the sprinkler body is connected to a converter. The converter is provided with a water separating cavity which is in communication with the water outlet port of the sprinkler body. A lower end of the water separator is mounted within the water separating cavity and can move up and down. An upper end of an inner wall of the water separating cavity is provided with a convex ring which fits the first sealing ring. A bottom surface of the water separating cavity is provided with a sealing gasket which can seal the inner flow channel.

As an improvement to the technical solution above, a sliding sleeve capable of moving along an axial direction is sheathed outside the converter, and the sprinkler head is fixedly connected inside the sliding sleeve.

As a further improvement to the technical solution above, an outer wall of the converter is provided with a thread, and the sliding sleeve is screwed on the thread.

As the further improvement, the sliding sleeve is mounted with a gum sleeve, and an outer wall of the gum sleeve is provided with an anti-skid pattern.

As a further improvement, the gum sleeve is fixedly connected to the sliding sleeve in an interference-fit manner.

As a further improvement, the sealing gasket is fixedly connected to the converter through a bolt.

As a further improvement, regarding to a kitchen sprinkler, the spraying water outlet body includes a scattering head, the scattering head is mounted on an upper end of the water separator, and the scattering head is provided with a plurality of water outlets that are circumferentially and averagely arranged, and are in communication with the annular flow channel.

As a further improvement, an upper end of the scattering head is mounted with a blocking piece, and the blocking piece is provided with a slope for blocking the water discharge of the water outlets.

As a further improvement, the sprinkler body is provided with a switch handle and a normally open compression ring, the switch handle is provided with a slot that fits the normally open compression ring, and the switch handle can keep an open state through the fit between the normally open compression ring and the slot.

The disclosure provides a kitchen faucet using the kitchen sprinkler, which includes a faucet body, a universal spring bend and a water outlet nozzle, the universal spring bend is connected to a water inlet port of the sprinkler body, and the faucet body is provided with a mounting support for fixing a wall.

The disclosure has the beneficial effects that: the lower end of the water separator is mounted within the water separating cavity of the converter and can move up and down; the water separator moving up is fitted and sealed with the first sealing ring through the convex ring at the upper end of the inner wall of the water separating cavity, so as to prevent the water in the water separating cavity from entering the annular flow channel through the water inlets; the water can only enter the inner flow channel, and then is sprayed out from the v-shaped water outlet body to form straight water discharge; the water separator moving down seals the inner flow channel through the sealing gasket, at the same time the first sealing ring is separated from the convex ring at the upper end of the inner wall of the water separating cavity to communicate the water inlets with the water separating cavity, and the water enters the annular flow channel and is sprayed out from the spraying water outlet body to form spraying water discharge. The disclosure is reasonable and practical in structure, and simple in use. The disclosure has small structure, and reduces the manufacture difficulty, so as to reduce the cost.

### BRIEF DESCRIPTION OF THE DRAWINGS

The disclosure is further described hereinafter with reference to the drawings showing an embodiment of the invention.
Fig. 1 is a structure diagram according to an embodiment of the invention;
Fig. 2 is a section view of the embodiment in the mode of the straight water discharge;
Fig. 3 is a partially enlarged diagram of Fig. 2;
Fig. 4 is a section view of the embodiment in the mode of the spraying water discharge;
Fig. 5 is a partially enlarged diagram of Fig. 4;
Fig. 6 is a breakdown structure diagram of the embodiment;
Fig. 7 is a structure diagram of a water separator of the embodiment;
Fig. 8 is a section view of the water separator of the embodiment;
Fig. 9 is a section view of a converter of the embodiement; and
Fig. 10 is a structure diagram of a kitchen faucet.

### DETAILED DESCRIPTION OF THE EMBODIMENTS

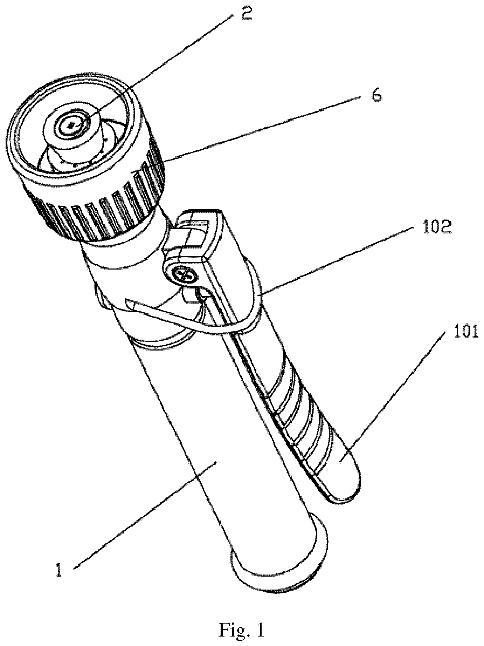

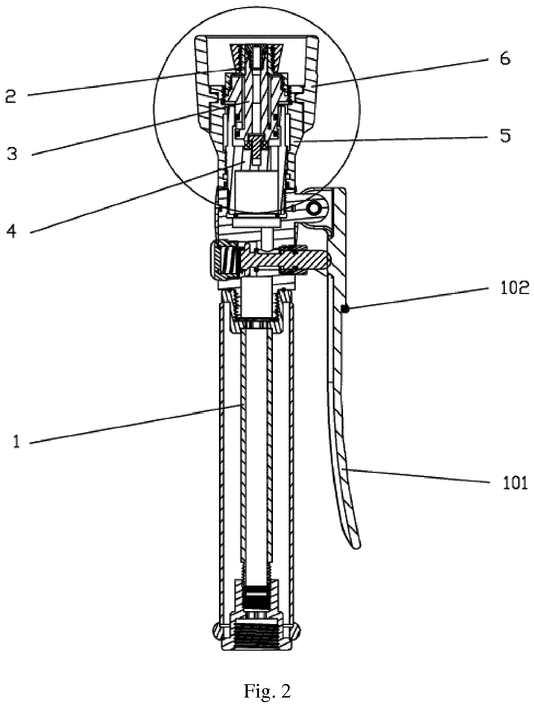

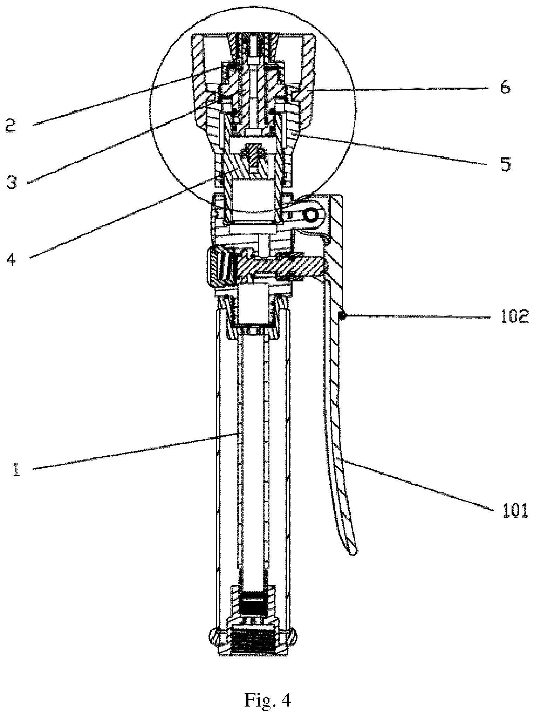

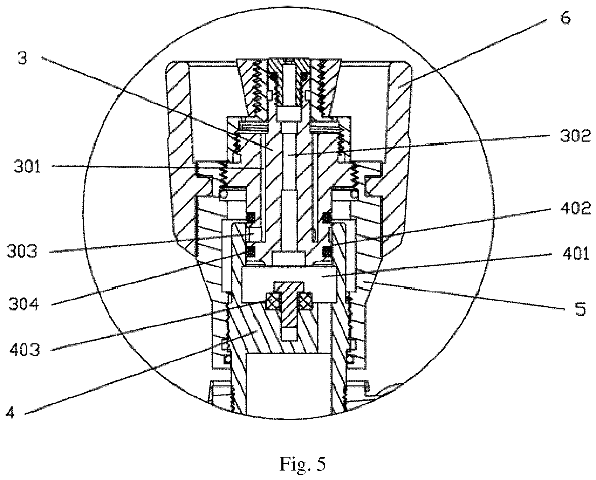

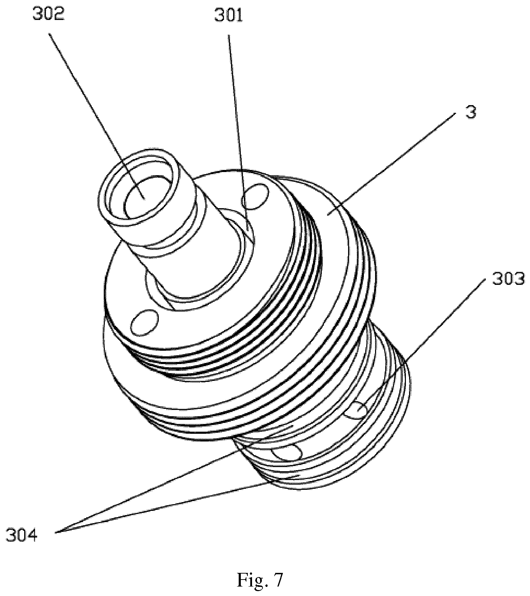

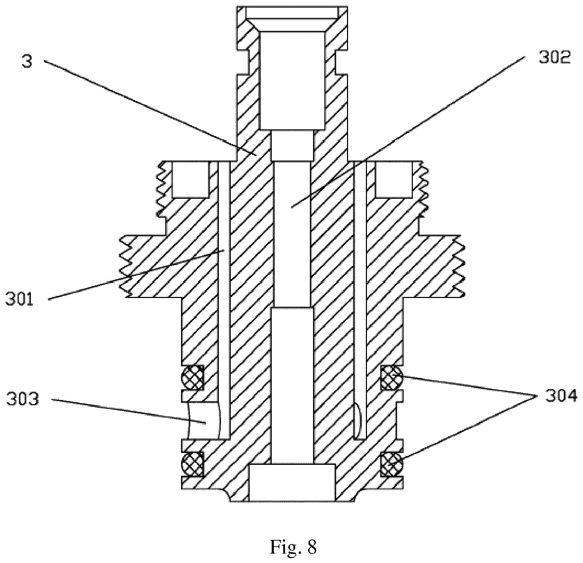

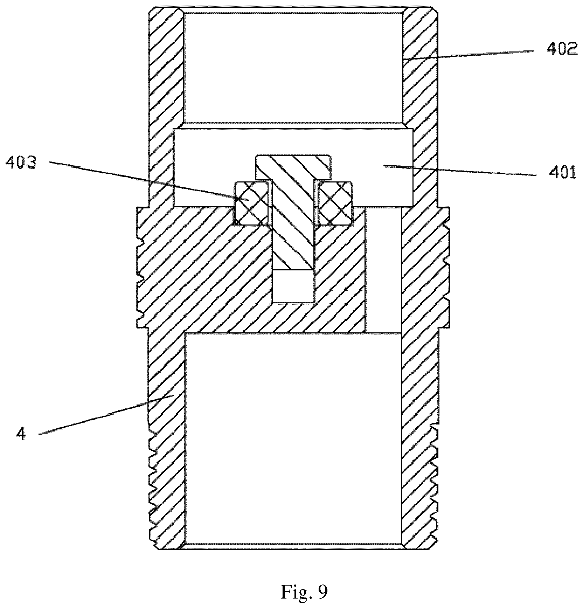

With reference to Fig. 1, a kitchen sprinkler includes a sprinkler body 1 and a sprinkler head 2 provided with a spraying water outlet body and a V-shaped water outlet body. With reference to Figs. 2 to 6, the sprinkler head 2 is provided with a water separator 3. With reference to Fig. 7 and Fig. 8, the water separator 3 is provided with an annular flow channel 301 and an inner flow channel 302 respectively in communication with the spraying water outlet body and the V-shaped water outlet body, a lower end of an outer wall of the water separator 3 is circumferentially provided with a plurality of water inlets 303 that are in communication with the annular flow channel 301. The upper and lower sides of the water inlets 303 are respectively provided with a first sealing ring 304. A water outlet port of the sprinkler body 1 is connected to a converter 4. With reference to Fig. 9, the converter 4 is provided with a water separating cavity 401 which is in communication with the water outlet port of the sprinkler body 1. A lower end of the water separator 3 is mounted within the water separating cavity 401 and can move up and down. An upper end of an inner wall of the water separating cavity 401 is provided with a convex ring 402 which fits the first sealing ring 304. A bottom surface of the water separating cavity 401 is provided with a sealing gasket 403 which can seal the inner flow channel 303. Preferably, the sealing gasket 403 is fixedly connected to the converter 4 through a bolt. Preferably, a sliding sleeve 5 capable of moving along an axial direction is sheathed outside the converter 4. The sprinkler head 2 is fixedly connected inside the sliding sleeve 5. An outer wall of the converter 4 is provided with a thread, and the sliding sleeve 5 is screwed on the thread. The sprinkler head 2 can move up and down through rotating the sliding sleeve 5, when the sprinkler head 2 moves up. The convex ring 402 is fitted and sealed with the first sealing ring 304 of upper and lower sides of the water inlet 303 to separate the water inlet 303. The water flowing in the water separating cavity 401 from the sprinkler body 1 can only enter the inner flow channel 302 of the water separator 3, and then is sprayed out from the v-shaped water outlet body to form straight water discharge. The sliding sleeve 5 is rotated again to drive the sprinkler head 2 to move down. The sealing gasket at the bottom surface of the water separating cavity 401 seals the inner flow channel 302. At the same time the first sealing ring 304 of the lower side of the water inlet 303 is separated from the convex ring 402 to communicate the water inlets 303 with the water separating cavity 401. The water of the water separating cavity 401 enters the annular flow channel 301 from the water inlets 303 and is sprayed out from the spraying water outlet body to form water spray. The kitchen sprinkler is convenient in use, simple and quick for conversion of water discharge modes, and it eliminates the defects of the existing kitchen sprinkler, such as very inconvenient use, easy falling, damaging or losing the replaced sprinkler head. Moreover, the overall structure is simple, with small volume, the assembly process is simplified, and the cost is reduced.

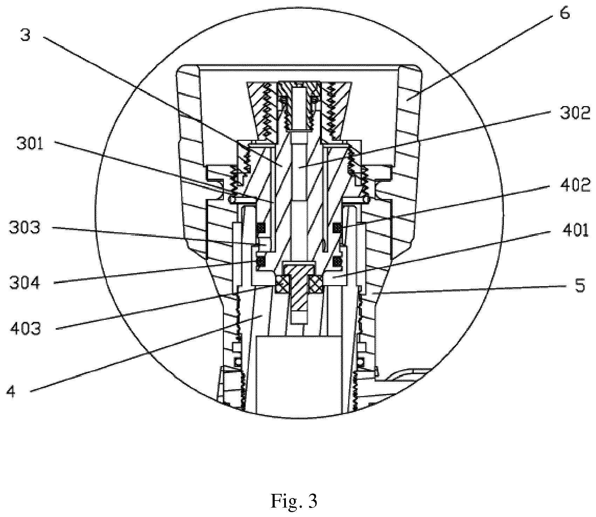

With reference to Fig. 3, in order to facilitate the rotation of the sliding sleeve 5 by the user, in the embodiment, preferably, a gum sleeve 6 is fixedly connected to the sliding sleeve 5 in an interference-fit manner. An outer wall of the gum sleeve 6 is provided with an anti-skid pattern to facilitate the twisting by the user.

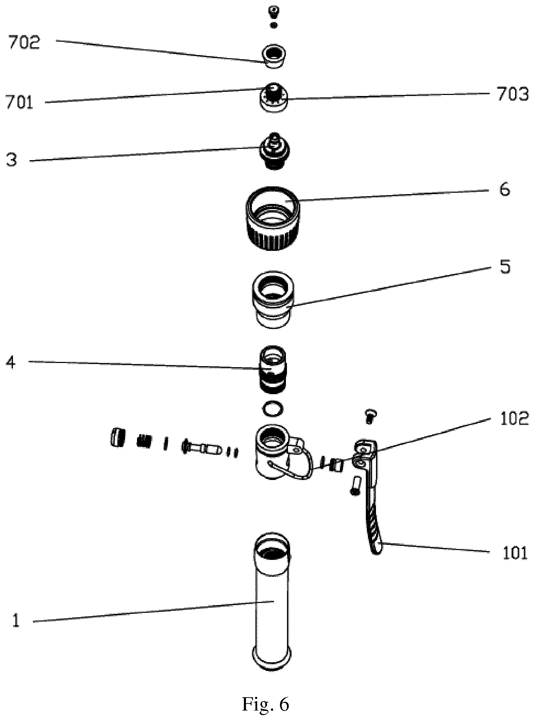

With reference to Fig. 6, in order to form uniform water spray with low pressure, in the embodiment, preferably, the spraying water outlet body includes a scattering head 701, the scattering head 701 is mounted on an upper end of the water separator 3, and the scattering head 701 is provided with a plurality of water outlets 703 that are circumferentially and averagely arranged, and are in communication with the annular flow channel 301. Preferably, an upper end of the scattering head 701 is mounted with a blocking piece 702, the blocking piece 702 is provided with a slope for blocking the water discharge of the water outlets 703, the water, after being sprayed from the plurality of water outlets 703 of the scattering head 701, strikes the slope of the blocking piece 702, so as to form uniform water spray with low pressure, thereby improving the user experience.

With reference to Fig. 1, in order to facilitate the use by the user, in the embodiment, preferably, the sprinkler body 1 is provided with a switch handle 101 and a normally open compression ring 102, the switch handle 101 is provided with a slot that fits the normally open compression ring 102, and the switch handle 101 can keep an open state through the fit between the normally open compression ring 102 and the slot. When the cooking utensil is washed, the switch handle 101 does not need to be pressed for a long time, which is more convenient in use.

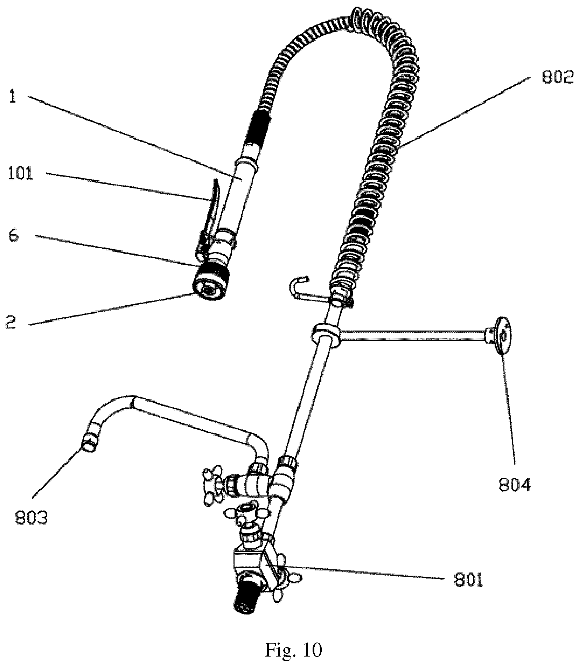

With reference to Fig. 10, the disclosure further provides a kitchen faucet using the kitchen sprinkler above, which includes a faucet body 801, a universal spring bend 802 and a water outlet nozzle 803. The universal spring bend 802 is connected to a water inlet port of the sprinkler body 1. The faucet body 801 is provided with a mounting support 804 for fixing a wall, so as to fix the kitchen faucet.

The foregoing is only preferred embodiments of the disclosure, but the disclosure is not limited to the embodiments above. If a solution reaches the technical effect by the same or similar means, and said solution falls within the scope of the claims, then it shall fall into the protection scope of the invention.

## Claims

1. A kitchen sprinkler, comprising a sprinkler body (1) and a sprinkler head (2) provided with a spraying water outlet body and a V-shaped water outlet body, wherein: the sprinkler head (2) is provided with a water separator(3); the water separator (3) is provided with an annular flow channel (301) and an inner flow channel (302) respectively in communication with the spraying water outlet body and the V-shaped water outlet body; a lower end of an outer wall of the water separator (3) is circumferentially provided with a plurality of water inlets (303) that are in communication with the annular flow channel (301); a lower side of the water inlets (303) is provided with a first sealing ring (304); the kitchen sprinkler comprises a converter (4); a water outlet port of the sprinkler body (1) is connected to the converter (4); the converter (4) is provided with a water separating cavity (401) which is in communication with the water outlet port of the sprinkler body (1); a lower end of the water separator (3) is mounted within the water separating cavity (401) and can move up and down; an upper end of an inner wall of the water separating cavity (401) is provided with a convex ring (402) which fits the first sealing ring (304); and a bottom surface of the water separating cavity (401) is provided with a sealing gasket (403) which can seal the inner flow channel (302).

2. The kitchen sprinkler according to claim 1, **characterized in that**: the kitchen sprinkler comprises a sliding sleeve (5); the sliding sleeve (5) capable of moving along an axial direction is sheathed outside the converter (4), and the sprinkler head (2) is fixedly connected inside the sliding sleeve (5).

3. The kitchen sprinkler according to claim 2, **characterized in that**: an outer wall of the converter (4) is provided with a thread, and the sliding sleeve (5) is screwed on the thread.

4. The kitchen sprinkler according to claim 3, **characterized in that**: the kitchen sprinkler comprises a gum sleeve (6); the sliding sleeve (5) is mounted with the gum sleeve (6), and an outer wall of the gum sleeve (6) is provided with an anti-skid pattern.

5. The kitchen sprinkler according to claim 4, **characterized in that**: the gum sleeve (6) is fixedly connected to the sliding sleeve (5) in an interference-fit manner.

6. The kitchen sprinkler according to claim 5, **characterized in that** the sealing gasket (403) is fixedly connected to the converter (4) through a bolt.

7. The kitchen sprinkler according to any one of claims 1 to 6, **characterized in that**: the spraying water outlet body comprises a scattering head (701); the scattering head (701) is mounted on an upper end of the water separator (3); and the scattering head (701) is provided with a plurality of water outlets (703) that are circumferentially and averagely arranged, and are in communication with the annular flow channel (301).

8. The kitchen sprinkler according to claim 7, **characterized in that**: the spraying water outlet body comprises a blocking piece (702); an upper end of the scattering head (701) is mounted with the blocking piece (702); and the blocking piece (702) is provided with a slope for blocking the water discharge of the water outlets (703).

9. The kitchen sprinkler according to claim 8, **characterized in that**: the sprinkler body (1) is provided with a switch handle (101) and a normally open compression ring (102); the switch handle (101) is provided with a slot that fits the normally open compression ring (102); and the switch handle (101) can keep an open state through the fit between the normally open compression ring (102) and the slot.

10. A kitchen faucet comprising the kitchen sprinkler according to any one of claims 1 to 6, **characterized in that** the kitchen faucet comprises a faucet body (801), a universal spring bend (802) and a water outlet nozzle (803); the universal spring bend (802) is connected to a water inlet port of the sprinkler body (1); and the faucet body (801) is provided with a mounting support (804) for fixing to a wall.

## Patentansprüche

1. Küchenbrause, die einen Brausekörper (1) und einen Brausekopf (2) umfasst, der mit einem Wassersprüh-Auslasskörper und einem V-förmigen Wasserauslasskörper versehen ist, wobei:
der Brausekopf (2) mit einem Wassertrenner (3) versehen ist; der Wassertrenner (3) mit einem ringförmigen Strömungskanal (301) und einem inneren Strömungskanal (302) versehen ist, die mit dem Wassersprüh-Auslasskörper bzw. dem V-förmigen Wasserauslasskörper in Kommunikation stehen; ein unteres Ende einer Außenwand des Wassertrenners (3) umfangsmäßig mit einer Vielzahl von Wassereinlässen (303) versehen ist, die mit dem ringförmigen Strömungskanal (301) in Kommunikation stehen; eine untere Seite der Wassereinlässe (303) mit einem ersten Dichtungsring (304) versehen ist; die Küchenbrause einen Umsteller (4) umfasst; eine Wasserauslassöffnung des Brausekörpers (1) mit dem Umsteller (4) verbunden ist; der Umsteller (4) mit einem Wassertrennhohlraum (401) versehen ist, der mit der Wasserauslassöffnung des Brausekörpers (1) in Kommunikation steht; ein unteres Ende des Wassertrenners (3) im Wassertrennhohlraum (401) angebracht ist und sich auf und ab bewegen kann; ein oberes Ende einer Innenwand des Wassertrennhohlraums (401) mit einem konvexen Ring (402) versehen ist, der zum ersten Dichtungsring (304) passt; und eine Bodenfläche des Wassertrennhohlraums (401) mit einer Dichtung (403) versehen ist, die den inneren Strömungskanal (302) dicht verschließen kann.

2. Küchenbrause nach Anspruch 1, **dadurch gekennzeichnet, dass**: die Küchenbrause eine Schiebemuffe (5) umfasst; die Schiebemuffe (5), die in der Lage ist, sich entlang einer axialen Richtung zu bewegen, um das Äußere des Umstellers (4) gehüllt ist, und der Brausekopf (2) im Inneren der Schiebemuffe (5) fest verbunden ist.

3. Küchenbrause nach Anspruch 2, **dadurch gekennzeichnet, dass**: eine Außenwand des Umstellers (4) mit einem Gewinde versehen ist, und die Schiebemuffe (5) auf das Gewinde geschraubt ist.

4. Küchenbrause nach Anspruch 3, **dadurch gekennzeichnet, dass**: die Küchenbrause eine Gummimuffe (6) umfasst; die Schiebemuffe (5) an der Gummimuffe (6) angebracht ist, und eine Außenwand der Gummimuffe (6) mit einem rutschhemmenden Muster versehen ist.

5. Küchenbrause nach Anspruch 4, **dadurch gekennzeichnet, dass**: die Gummimuffe (6) in der Art einer Presspassung fest mit der Schiebemuffe (5) verbunden ist.

6. Küchenbrause nach Anspruch 5, **dadurch gekennzeichnet, dass** die Dichtung (403) über einen Bolzen fest mit dem Umsteller (4) verbunden ist.

7. Küchenbrause nach einem der Ansprüche 1 bis 6, **dadurch gekennzeichnet, dass**: der Wassersprüh-Auslasskörper einen Streukopf (701) umfasst; der Streukopf (701) an einem oberen Ende des Wassertrenners (3) angebracht ist; und der Streukopf (701) mit einer Vielzahl von Wasserauslässen (703) versehen ist, die umfangsmäßig und durchschnittlich angeordnet sind und mit dem ringförmigen Strömungskanal (301) in Kommunikation stehen.

8. Küchenbrause nach Anspruch 7, **dadurch gekennzeichnet, dass**: der Wassersprüh-Auslasskörper ein Blockierstück (702) umfasst; ein oberes Ende des Streukopfs (701) am Blockierstück (702) angebracht ist; und das Blockierstück (702) mit einer Neigung versehen ist, um den Wasserablauf aus den Wasserauslässen (703) zu blockieren.

9. Küchenbrause nach Anspruch 8, **dadurch gekennzeichnet, dass**: der Brausekörper (1) mit einem Schaltgriff (101) und einem normalerweise offenen Kompressionsring (102) versehen ist; der Schaltgriff (101) mit einem Schlitz versehen ist, der zu dem normalerweise offenen Kompressionsring (102) passt; und der Schaltgriff (101) durch die Passung zwischen dem normalerweise offenen Kompressionsring (102) und dem Schlitz einen offenen Zustand halten kann.

10. Küchenarmatur, die die Küchenbrause nach einem der Ansprüche 1 bis 6 umfasst, **dadurch gekennzeichnet, dass** die Küchenarmatur einen Armaturenkörper (801), einen Universal-Federbogen (802) und eine Wasserauslassdüse (803) umfasst; der Universal-Federbogen (802) mit einer Wassereinlassöffnung des Brausekörpers (1) verbunden ist; und der Armaturenkörper (801) mit einer Halterung (804) zur Befestigung an einer Wand versehen ist.

## Revendications

1. Arroseur de cuisine, comprenant un corps d'arroseur (1) et une tête d'arroseur (2) pourvue d'un corps de sortie de pulvérisation d'eau et d'un corps de sortie d'eau en forme de V, dans lequel :
la tête d'arroseur (2) est pourvue d'un séparateur d'eau (3) ; le séparateur d'eau (3) est pourvu d'un canal d'écoulement annulaire (301) et d'un canal d'écoulement intérieur (302) respectivement en communication avec le corps de sortie de pulvérisation d'eau et le corps de sortie d'eau en forme de V ; une extrémité inférieure d'une paroi extérieure du séparateur d'eau (3) est circonférentiellement pourvue d'une pluralité d'entrées d'eau (303) qui sont en communication avec le canal d'écoulement annulaire (301) ; un côté inférieur des entrées d'eau (303) est pourvu d'un premier anneau d'étanchéité (304) ; l'arroseur de cuisine comprend un convertisseur (4) ; un orifice de sortie d'eau du corps d'arroseur (1) est connecté au convertisseur (4) ; le convertisseur (4) est pourvu d'une cavité de séparation d'eau (401) qui est en communication avec l'orifice de sortie d'eau du corps d'arroseur (1) ; une extrémité inférieure du séparateur d'eau (3) est montée dans la cavité de séparation d'eau (401) et peut monter et descendre ; une extrémité supérieure d'une paroi intérieure de la cavité de séparation d'eau (401) est pourvue d'un anneau convexe (402) qui s'adapte au premier anneau d'étanchéité (304) ; et une surface de fond de la cavité de séparation d'eau (401) est pourvue d'un joint d'étanchéité (403) qui peut sceller le canal d'écoulement intérieur (302).

2. Arroseur de cuisine selon la revendication 1, **caractérisé en ce que**: l'arroseur de cuisine comprend un manchon coulissant (5) ; le manchon coulissant (5) capable de se déplacer le long d'une direction axiale est gainé à l'extérieur du convertisseur (4), et la tête d'arroseur (2) est reliée de façon fixe à l'intérieur du manchon coulissant (5).

3. Arroseur de cuisine selon la revendication 2, **caractérisé en ce que** : une paroi extérieure du convertisseur (4) est pourvue d'un filetage, et le manchon coulissant (5) est vissé sur le filetage.

4. Arroseur de cuisine selon la revendication 3, **caractérisé en ce que** : l'arroseur de cuisine comprend un manchon en gomme (6) ; le manchon coulissant (5) est monté avec le manchon en gomme (6), et une paroi extérieure du manchon (6) est pourvue d'un motif antidérapant.

5. Arroseur de cuisine selon la revendication 4, **caractérisé en ce que** : le manchon en gomme (6) est relié de façon fixe au manchon coulissant (5) par ajustement avec serrage.

6. Arroseur de cuisine selon la revendication 5, **caractérisé en ce que** le joint d'étanchéité (403) est relié à demeure au convertisseur (4) par l'intermédiaire d'un boulon.

7. Arroseur de cuisine selon l'une quelconque des revendications 1 à 6, **caractérisé en ce que** : le corps de sortie de pulvérisation d'eau comprend une tête de diffusion (701) ; la tête de diffusion (701) est montée sur une extrémité supérieure du séparateur d'eau (3) ; et la tête de diffusion (701) est pourvue d'une pluralité de sorties d'eau (703) qui sont agencées de manière circonférentielle et en moyenne, et sont en communication avec le canal d'écoulement annulaire (301).

8. Arroseur de cuisine selon la revendication 7, **caractérisé en ce que** : le corps de sortie de pulvérisation d'eau comprend une pièce de blocage (702) ; une extrémité supérieure de la tête de diffusion (701) est montée avec la pièce de blocage (702) ; et la pièce de blocage (702) est pourvue d'une pente pour bloquer la décharge d'eau des sorties d'eau (703).

9. Arroseur de cuisine selon la revendication 8, **caractérisé en ce que** : le corps d'arroseur (1) est pourvu d'une manette de commutation (101) et d'un anneau de compression normalement ouvert (102) ; la manette de commutation (101) est pourvue d'une fente qui s'adapte à l'anneau de compression normalement ouvert (102) ; et la manette de commutation (101) peut maintenir un état ouvert par l'adaptation entre l'anneau de compression normalement ouvert (102) et la fente.

10. Robinet de cuisine comprenant l'arroseur de cuisine selon l'une quelconque des revendications 1 à 6, **caractérisé en ce que** le robinet de cuisine comprend un corps de robinet (801), un coude de ressort universel (802) et une buse de sortie d'eau (803) ; le coude de ressort universel (802) est relié à un orifice d'entrée d'eau du corps d'arroseur (1) ; et le corps de robinet (801) est pourvu d'un support de montage (804) pour fixation à une paroi.
